# EUROPÄISCHE PATENTANMELDUNG

(11) **EP 2 614 707 A1**
(43) Veröffentlichungstag der Anmeldung: **17.07.2013**
(21) Anmeldenummer: 13000168.8
(22) Anmeldetag: 14.01.2013
(51) Int. Cl.: A01K 1/015

(54) **Bodenelement für einen Viehstall**

(30) Priorität: 12.01.2012 DE 102012200427
(71) Anmelder: Hartmann Grundbesitz GmbH & Co. KG, 92265 Edelsfeld (DE)
(72) Erfinder: Hartmann, Hans, 92265 Edelsfeld (DE)
(74) Vertreter: MERH-IP Matias Erny Reichl Hoffmann

(57) **Zusammenfassung**

Bodenelement zum Auslegen auf dem Boden eines Viehstalls, mit einem Basiselement 2, 12, auf dessen Oberseite eine Vielzahl von einzelnen, voneinander beabstandeten Erhebungen 1, 11, 21 angeordnet sind, und einem nach oben hin offenen, sich zwischen den Erhebungen erstreckenden Bereich 3 zur Aufnahme von Einstreu 4 und Flüssigkeit, wobei die Erhebungen 1, 11, 21 an ihrer Oberseite eine abgerundete Oberfläche aufweisen, und die Verteilung der Erhebungen (1; 11; 21) auf dem Basiselement (2;12) so bemessen ist, dass bei einer Höhe der Erhebungen 1, 11, 21 von mindestens 8cm, gemessen von ihrem Fuß auf der Oberseite des Basiselements 2, 12 bis zu ihrem höchsten Punkt über dem Basiselement 2, 12 ein direkter Kontakt von in dem Viehstall gehaltenen Vieh mit der in dem sich zwischen den Erhebungen erstreckenden Bereich (3) aufgenommenen Flüssigkeit verhindert wird.

## Beschreibung

Die Erfindung betrifft ein Bodenelement zum Auslegen auf dem Boden eines Viehstalls, insbesondere eines Stalls für Milchvieh, insbesondere auf dem Boden eines Liegeplatzes für Milchvieh, insbesondere auf dem Boden einer Tiefbox.

### Hintergrund der Erfindung

Im Hinblick auf tiergerechte Haltung, aber auch aus wirtschaftlichen Überlegungen heraus, findet in der landwirtschaftlichen Viehhaltung, insbesondere in der Haltung von Milchvieh, die Haltung von Vieh in einem Laufstall zunehmende Verbreitung. In einem Laufstall für Milchkühe müssen in einem Verhältnis zur Anzahl der im Stall gehaltenen Kühe Liegeplätze bereitgestellt werden. Im Sinne einer tiergerechten Haltung sind hierfür im Idealfall einstreubedeckte, beispielsweise strohbedeckte, Liegeplätze vorgesehen. Diese können in Form einer Liegemulde oder Liegebox (Tiefbox) ausgebildet sein.

Bekanntermaßen ist die Milchleistung einer Kuh dann am größten, wenn die Kuh vornehmlich frisst oder ruht. Aus dieser Tatsache ergeben sich hohe Anforderungen an den Komfort einer Liegebox, um den Aufenthalt der Kuh in der Liegebox so angenehm wie möglich zu gestalten und so die Liegezeiten der Kuh weitestmöglich zu verlängern. Unzureichender Liegekomfort führt zwangsläufig dazu, dass die Kuh versucht, ihre Liegeposition häufig zu ändern, oder über den Tag verteilt für eine insgesamt kürzere Dauer in der Liegebox liegt.

Eine weitere, die Milchleistung mitbestimmende Einflussgröße ist der Gesundheitszustand der Kühe. Hier kann hoher Liegekomfort dazu beitragen, die Gefahr von Verletzungen der Gliedmaßen der Kühe reduzieren und so den Gesundheitszustand der Kühe zu verbessern. Durch das Abliegen der Kühe oder das Scheuern ihrer Gliedmaßen auf zu feuchtem Untergrund kann es zu Scheuerstellen an Knochenvorsprüngen, insbesondere an den Gelenken kommen, und durch das Abliegen der Kühe auf zu hartem Untergrund können sich Druckstellen an den Gelenken bilden. Derartige Verletzungen, die unter Umständen eitrige Entzündungen zur Folge haben, können bei Gewährleistung eines hohen Liegekomforts ausgeschlossen werden. Hoher Liegekomfort trägt daher nicht nur in mehrfacher Hinsicht dazu bei, die Milchleistung der Kühe zu steigern, sondern hilft gleichzeitig, Tierarztkosten zu reduzieren und das Leben der Kühe zu verlängern.

Der Liegekomfort der Kühe wird von den Ausmaßen der Liegebox und maßgeblich von der Qualität der Einstreuauflage in der Liegebox bestimmt. Daraus ergeben sich klare Mindestanforderungen an die Beschaffenheit der Einstreuauflage, wobei entscheidende Faktoren für die Bewertung der Qualität der Einstreuauflage deren Trockenheit und Elastizität sind. Nicht zuletzt stellen Förderrichtlinien zur Vergabe staatlicher Fördermittel an Landwirte, wie auch die Vorgaben von Zertifizierungsverbänden, strenge Mindestanforderungen an die Beschaffenheit der Einstreuauflage.

Ein Beispiel für einen besonders vorteilhaften im Stand der Technik bekannten Liegeplatz ist die in der Patentschrift DE 10 2005 034 670 B4 offenbarte Liegebox von Hartmann, die in einem Betonfertigteil ausgebildet ist. Das Betonfertigteil umfasst eine Umrandung, die einen rechteckförmigen Bereich umschließt, so dass der im Wesentlichen ebene Boden des umschlossenen Bereichs etwa 23cm unterhalb der Oberkante einer einen Teil der Umrandung bildenden Kotschwelle liegt. Dieser Bereich kann bis zur erforderlichen Höhe mit Einstreu, beispielsweise mit Stroh, aufgefüllt werden. Eine Drainage wird durch im Boden des umschlossenen Bereichs eingeformte rillenartige Vertiefungen mit einer Tiefe von einigen Millimetern gebildet. Gleichzeitig sollen die rillenartigen Vertiefungen ein Verscharren der Einstreu durch die Kühe begrenzen, und so zu verbesserter Matratzenbildung der Einstreu beitragen.

Es hat sich jedoch herausgestellt, dass der oben beschriebene Liegeplatz Möglichkeit für weitere Verbesserungen bietet. Insbesondere können die folgenden Nachteile im Stand der Technik auftreten.

Zunächst ist im Stand der Technik eine verhältnismäßig große Menge Einstreu, wie zum Beispiel Stroh, erforderlich, um einen den Anforderungen an Tiergerechtheit und Liegekomfort entsprechenden Liegeplatz zu schaffen. Regelmäßig ist hierzu eine Dicke der Einstreumatratze von etwa zehn Zentimetern oder mehr zu gewährleisten. Allerdings hat insbesondere der Rohstoff Stroh als Einstreu in jüngster Zeit einen deutlichen Preisanstieg erfahren, so dass Bestrebungen bestehen, die Menge der erforderlichen Einstreu zu reduzieren, ohne dadurch den Liegekomfort der Kühe einzuschränken.

Weiterhin kommt es trotz der im Stand der Technik getroffenen Vorkehrungen oftmals zu einem Verscharren der Einstreu durch die Kühe. Durch dieses Verscharren können auf dem Boden der Liegebox Bereiche mit unzureichender Dicke der Einstreumatratze entstehen, so dass der Liegekomfort der Kühe eingeschränkt wird, und zudem die oben beschriebenen Verletzungen an den Gliedmaßen der Kühe auftreten können.

Zuletzt kann bei den im Stand der Technik bekannten Liegeplätzen das Problem auftreten, dass die Drainage nicht ausreichend ist, um die Einstreuauflage, insbesondere deren höhere Schichten, trocken zu halten. In den Boden der Tiefbox eingeformte Rillen verstopfen schnell und sind nur bedingt geeignet, Flüssigkeit zuverlässig abzuführen. Obwohl im Stand der Technik bekannte Liegeboxen so bemaßt sind, dass Fäkalien bevorzugt auf die hinter der Kotschwelle der Tiefbox liegende Lauffläche des Stalls fallen, kann es dennoch vorkommen, dass auch die Einstreumatratze durch Kontakt mit Fäkalien Feuchtigkeit aufnimmt. In so einem Fall kann sich Flüssigkeit auf dem Boden der Liegebox sammeln, und es besteht insbesondere bei geringer Dicke der Einstreumatratze die Gefahr, dass die Gliedmaßen einer in der Liegebox ruhenden Kuh andauernden Kontakt mit Flüssigkeit haben. Hierdurch wird nicht nur der unmittelbare Liegekomfort der Kühe herabgesetzt; vielmehr besteht zusätzlich die Gefahr, dass die Kühe sich wundliegen und es zu den bereits oben geschilderten Schäden an den Gelenken der Kühe kommt.

### Zusammenfassung der Erfindung

Es ist die Aufgabe der vorliegenden Erfindung, ein Bodenelement zum Auslegen auf dem Boden eines Viehstalls, insbesondere Kuhstalls, zu schaffen, das die obengenannten, im Stand der Technik auftretenden Nachteile behebt. Es ist eine weitere Aufgabe der Erfindung, die Menge der benötigten Einstreu zu reduzieren ohne dabei den Liegekomfort des Viehs einzuschränken. Es ist eine weitere Aufgabe der Erfindung, dem Vieh durch Kontakt mit einer harten Auflagefläche oder durch andauernden Kontakt mit in die Einstreu eingebrachter Feuchtigkeit entstehende Verletzungen an den Gliedmaßen zu vermeiden.

Zur Lösung dieser Aufgaben werden die erfindungsgemäßen Bodenelemente mit den Merkmalen der untenstehenden unabhängigen Patentansprüche vorgeschlagen. Vorteilhafte Weiterbildungen der Erfindung sind Gegenstand der abhängigen Patentansprüche.

Im Folgenden wird, stellvertretend für Vieh, insbesondere Milchvieh, konkret auf Kühe Bezug genommen. Die vorliegende Erfindung ist jedoch keinesfalls auf Anwendungen in Verbindung mit Kühen beschränkt. Gleichermaßen wird, stellvertretend für einen Liegeplatz, konkret auf eine Liegebox (Tiefbox) Bezug genommen. Die vorliegende Erfindung ist jedoch keinesfalls auf Anwendungen in Verbindung mit Liegeboxen beschränkt.

Gemäß einem ersten Aspekt der Erfindung wird ein Bodenelement zum Auslegen auf dem Boden eines Viehstalls vorgeschlagen, mit einem Basiselement, auf dessen Oberseite eine Vielzahl von einzelnen, voneinander beabstandeten Erhebungen angeordnet sind, und einem nach oben hin offenen, sich zwischen den Erhebungen erstreckenden Bereich zur Aufnahme von Einstreu und Flüssigkeit, wobei die Erhebungen an ihrer Oberseite eine abgerundete Oberfläche aufweisen, und die Verteilung der Erhebungen auf dem Basiselement so bemessen ist, dass bei einer Höhe der Erhebungen von mindestens 8cm, gemessen von ihrem Fuß auf der Oberseite des Basiselements bis zu ihrem höchsten Punkt über dem Basiselement ein direkter Kontakt von in dem Viehstall gehaltenen Vieh mit der in dem sich zwischen den Erhebungen erstreckenden Bereich aufgenommenen Flüssigkeit verhindert wird.

Bei dem Basiselement kann es sich, abhängig vom Material des Bodenelements, insbesondere um eine Basismatte oder um eine Basisplatte handeln.

Bei Auslage des erfindungsgemäßen Bodenelements in der Tiefbox ist es lediglich erforderlich, den Zwischenraum zwischen den Erhebungen mit Einstreu, beispielsweise Stroh, auszufüllen, und gegebenenfalls eine Einstreuschicht oberhalb der Erhebungen bereitzustellen. Somit wird, entsprechend dem Rauminhalt der Vielzahl von Erhebungen, weniger Einstreu benötig, woraus sich erhebliche Einsparungen im Hinblick auf Transport- und Materialaufwendungen ergeben.

Gleichsam kann durch Auslegen des erfindungsgemäßen Bodenelements auf dem Boden einer Tiefbox auch bei Verwendung einer reduzierten Menge an Einstreu ein tiergerechter Liegekomfort gewährleistet werden. Durch die abgerundeten Oberflächen an den Oberseiten der Erhebungen werden Verletzungen der Kühe bei einem Abliegen oder Ruhen direkt auf den Erhebungen, wie dies beispielsweise bei geringer Dicke der Einstreuschicht vorkommen kann, wirksam ausgeschlossen. Weiterhin werden durch die spezielle Oberflächengestaltung der Erhebungen den Liegekomfort der Kühe einschränkende Druck- und Scheuerstellen an den Gliedmaßen der Kühe vermieden. Die vorliegende Erfindung vereint somit in vorteilhafter Weise die Möglichkeit einer Einsparung von Einstreu mit dennoch optimalem Liegekomfort der Kühe.

Durch die erfindungsgemäße Wahl der Höhe der Erhebungen über dem Basiselement kann sich in die Einstreuauflage eingebrachte Flüssigkeit auf der Oberfläche des Basiselements zwischen den Erhebungen sammeln, so dass höher gelegene Schichten der Einstreuauflage zuverlässig trocken gehalten werden. Die Erhebungen sind dabei so beabstandet, dass die Kühe nicht mit der Flüssigkeit in Kontakt kommen können. Insbesondere sind die Erhebungen so voneinander beabstandet, dass die Klauen von einer auf dem Bodenelement stehenden Kuh und/oder die Gelenke von einer auf dem Bodenelement ruhenden Kuh nicht zwischen den Erhebungen einsinken können und stets auf den abgerundeten Oberflächen der Erhebungen aufliegen. Somit kann es zu keinem Kontakt zwischen den Klauen oder Gelenken der Kuh, die sich ja oberhalb der Erhebungen befinden, und der Flüssigkeit, die sich auf der Oberfläche des Basiselements gesammelt hat, kommen. Hierdurch wird der Liegekomfort erhöht, und ein Wundliegen der Kuh vermieden.

Durch die erfindungsgemäße Beabstandung der Erhebungen kann Flüssigkeit, die sich auf der Oberfläche des Basiselements zwischen den Erhebungen gesammelt hat, kann durch die Körperwärme der in der Tiefbox liegende Kuh und/oder durch Luftzirkulation innerhalb des Stalls abtrocknen. Das Volumen des sich zwischen den Erhebungen erstreckenden Bereichs, das zur Aufnahme von Flüssigkeit zur Verfügung steht und das von der Beabstandung der Erhebungen und der Höhe der Erhebungen abhängt, ist dabei erfindungsgemäß an die typische Rate anfallender Flüssigkeit und die Verdunstungsrate angepasst. So kann verhindert werden, dass der Pegel der Flüssigkeit über ein vorgegebenes Maß ansteigt. Eine Drainage, beispielsweise in die Oberfläche des Basiselements eingeformte Rillen oder das Basiselement durchstoßende Öffnungen, deren Wirksamkeit durch häufig auftretende Verstopfung ohnehin eingeschränkt wäre, ist bei dem erfindungsgemäßen Bodenelement aufgrund der Verdunstung der Flüssigkeit somit nicht erforderlich. Auch auf dem Boden der Tiefbox selbst kann auf entsprechende Strukturen zum Abführen von Flüssigkeit, die beispielsweise seitlich von dem Bodenelement herabgeflossen, oder durch Drainagelöcher direkt auf den Boden der Tiefbox gelangt ist, verzichtet werden.

Zuletzt kann sich Einstreu, insbesondere Stroh, zwischen den Erhebungen des Bodenelements gut verhaken, so dass die Matratzenbildung verbessert, und ein Verscharren der Einstreu durch die Kühe nahezu ausgeschlossen wird.

Die vorliegende Erfindung ermöglicht es somit in vorteilhafter Weise, bei reduzierter Einstreumenge eine trockene, stabile, den Komfortansprüchen der Kühe genügende Einstreuauflage zu schaffen, die zudem kein Drainagesystem auf dem Boden der Tiefbox selbst erforderlich macht.

Gemäß einer vorteilhaften Weiterbildung der Erfindung weisen die Erhebungen in einer Ebene parallel zur Oberfläche des Basiselements einen im Wesentlichen kreis- oder ringförmigen Querschnitt, einen im Wesentlichen ovalen Querschnitt, oder einen im Wesentlichen quadrat- oder rechteckförmigen Querschnitt, bei dem die Ecken abgerundet sind, auf.

Durch diese Wahl besonders einfach geformter Erhebungen können bei gleichzeitigem Erreichen der oben angegebenen vorteilhaften Wirkungen der Erfindung die Herstellungskosten des Bodenelements reduziert werden.

Vorzugsweise weist der im Wesentlichen kreis- oder ringförmige Querschnitt einen Durchmesser von 3cm bis 7cm, oder der im Wesentlichen ovale Querschnitt einen größten Durchmesser von 3cm bis 7cm, oder der im Wesentlichen quadrat- oder rechteckförmige Querschnitt eine Flächendiagonale von 3cm bis 7cm auf.

Ein besonderer Vorteil ergibt sich, wenn unmittelbar benachbarte Erhebungen so voneinander beabstandet sind, dass der kleinste Abstand zwischen einander zugewandten Seitenflächen der unmittelbar benachbarten Erhebungen 2cm bis 3,5cm beträgt.

Mit den oben angegebenen Abmessungen und Abständen der Erhebungen ist das erfindungsgemäße Bodenelement in besonderer Weise an die Anatomie einer ausgewachsenen Kuh angepasst. Insbesondere ist der Durchmesser der Erhebungen groß genug gewählt, um bei einem Abliegen oder Ruhen der Kuh auf den Erhebungen keine Druckstellen zu verursachen, wie sie durch hohe punktuelle Belastung bei zu klein gewählten Auflageflächen an den Oberseiten der Erhebungen auftreten können. Die Erhebungen sind weiterhin so beabstandet, dass die Gelenke oder die Klauen der Kuh nicht zwischen benachbarten Erhebungen versinken können. Ein Scheuern der Gelenke oder Klauen der Kuh zwischen den Erhebungen, sowie der Kontakt der Gliedmaßen der Kuh mit Flüssigkeit, die sich auf der Oberfläche des Basiselements zwischen den Erhebungen gesammelt hat, kann daher ausgeschlossen werden. Insbesondere machen es die erfindungsgemäß gewählten Abstände der Erhebungen unmöglich, dass die Gelenke oder Klauen mit der Oberfläche des Basiselements in Berührung kommen. Vielmehr liegen die Gelenke und Klauen auf den abgerundeten Oberflächen der Erhebungen auf. Weiterhin verhindert ein wie oben gewählter Abstand der Erhebungen ein Verscharren der Einstreu durch die Kühe, da sich insbesondere Stroh als Einstreu aufgrund der die Abstände überschreitenden Länge der Strohhalme besonders gut zwischen den Erhebungen verhakt und die Kühe mit ihren Klauen kaum in den Bereich zwischen den Erhebungen gebildeten Bereich eindringen können.

Daneben stellen die oben angegebenen Abmessungen und Abstände der Erhebungen sicher, dass Flüssigkeit, die sich auf der Oberfläche des Basiselements zwischen den Erhebungen gesammelt hat, in kurzer Zeit verdunsten kann. Die hierfür unter anderem maßgebende Größe der Oberfläche des Bereichs, in dem Flüssigkeit aufgenommen werden kann, ist erfindungsgemäß durch die oben angegebenen Abmessungen und Abstände so gewählt, das einerseits gute Verdunstungseigenschaften erzielt werden können, andererseits aber ein Einsinken der Klauen und Gelenke der Kühe zwischen den Erhebungen verhindert wird.

Ferner wird vorgeschlagen, dass das Basiselement über seine Fläche eine konstante Dicke aufweist, so dass das Basiselement selbst kein Gefälle besitzt.

Ein Gefälle des Basiselements zum Abführen von Flüssigkeit ist nicht erforderlich, da in die Einstreuschicht eingebrachte Flüssigkeit aufgrund der vorteilhaften Eigenschaften des Bodenelements in kurzer Zeit abtrocknen kann, ohne den Liegekomfort der Kuh einzuschränken. Ein Ableiten der Flüssigkeit von dem Bodenelement herunter ist nicht erforderlich. Das Basiselement kann deshalb besonders einfach aufgebaut sein, und das erfindungsgemäße Bodenelement kann in besonders einfacher, kostengünstiger Weise hergestellt werden.

Ein weiterer Vorteil ergibt sich, wenn die Erhebungen in ihrem Inneren einen Hohlraum aufweisen. Dieser kann insbesondere im Wesentlichen die Form eines Zylinders oder eines Konus haben.

Ein im Inneren der Erhebungen vorhandener Hohlraum erlaubt es, bei der Herstellung des Bodenelements Material einzusparen und so die Herstellungskosten zu senken. Dabei hat sich herausgestellt, dass insbesondere zylindrische oder konische Hohlraume besonders vorteilhaft sind im Hinblick auf die Stabilität der Erhebungen gegenüber Belastungen, wie sie durch eine auf dem Bodenelement stehende oder ruhende Kuh verursacht werden.

Gemäß einer weiteren vorteilhaften Weiterbildung der Erfindung sind die Erhebungen entlang sich kreuzender Reihen von Erhebungen angeordnet. Vorzugsweise sind die Abstände zwischen benachbarten Erhebungen innerhalb einer Reihe jeweils gleich. Insbesondere können die Erhebungen an den Gitterpunkten eines ebenen periodischen Gitters angeordnet sein. Vorzugsweise handelt es sich bei dem ebenen periodischen Gitter um ein Quadrat-, Rechteck- oder Dreieckgitter.

Von besonderem Vorteil ist es, wenn die Erhebungen so dimensioniert und voneinander beabstandet sind, dass eine auf das Bodenelement aufgesetzte Klaue einer ausgewachsenen Kuh unabhängig von ihrer Orientierung Kontakt mit zumindest vier der Erhebungen hat.

Durch eine solche Ausgestaltung des Bodenelements kann eine gleichmäßige Verteilung des Gewichts der Kuh auf eine hinreichend große Anzahl von Erhebungen sichergestellt werden. Punktuelle Belastungen der Klauen der Kuh werden hierdurch ebenso vermieden wie eine zu starke Belastung einer einzelnen Erhebung des Bodenelements. Daneben hat diese Ausgestaltung des Bodenelements den oben erwähnten Vorteil, dass ein Einsinken der Klauen der Kuh, aber aufgrund ähnlicher Größenverhältnisse auch deren Gelenke, zwischen den Erhebungen verhindert wird. Die Klauen und Gelenke der Kuh kommen also nicht mit der Oberfläche des Basiselements in Berührung, sondern liegen vielmehr auf den abgerundeten Oberflächen der Erhebungen auf.

Vorzugsweise beträgt die Breite des Basiselements zumindest etwa 110cm und die Länge zumindest etwa 150cm. Dabei kann das Bodenelement aus mehreren, beispielsweise vier Teilelementen bestehen, die miteinander verzapft sind.

Gemäß einem weiteren Aspekt der Erfindung wird ein Bodenelement zum Auslegen auf dem Boden eines Viehstalls vorgeschlagen, mit einer Vielzahl von parallel zueinander angeordneten Profilelementen, die ein in ihrer Längsrichtung verlaufendes Holmprofil und ein in ihrer Längsrichtung verlaufendes, das Holmprofil tragende Stegprofil aufweisen, wobei zwischen jeweils benachbarten Profilelementen ein nach oben hin geöffneter Bereich zur Aufnahme von Einstreu und Flüssigkeit gebildet wird, die Holmprofile an ihrer Oberseite eine abgerundete Oberfläche aufweisen, und die Profilelemente so voneinander beabstandet sind, dass bei einer Höhe der Stegprofile von mindestens 8 cm, gemessen von dem Boden des Viehstalls bis zur Unterseite des jeweiligen Holmprofils ein direkter Kontakt von in dem Viehstall gehaltenem Vieh mit der in dem nach oben hin geöffneten Bereich aufgenommenen Flüssigkeit verhindert wird.

Diese Ausführungsform der vorliegenden Erfindung ermöglicht es, gleichsam der oben beschriebenen ersten Ausführungsform, in vorteilhafter Weise bei reduzierter Einstreumenge eine trockene, stabile, den Komfortansprüchen der Kühe genügende Einstreuauflage zu schaffen, ohne dass hierzu ein Drainagesystem im Boden der Tiefbox bzw. im Boden des Viehstalls erforderlich wäre.

Vorzugsweise sind die Profilelemente entlang einer ersten Richtung angeordnet, und das Bodenelement umfasst ferner eine Vielzahl von entlang einer zweiten, die erste Richtung kreuzenden zweiten Richtung angeordneten, sich mit den Profilelementen kreuzenden Streben, wobei die Profilelemente mit den sie kreuzenden Streben verbunden sind.

Vorzugsweise beträgt ein kleinster Abstand zwischen einander zugewanden Seitenflächen benachbarter Profilelemente 3cm bis 4cm, so dass zwischen benachbarten Holmprofilen ein Spalt mit einer Breite von 3cm bis 4cm gebildet wird.

Hierdurch wird, wie im Falle des ersten Aspekts der Erfindung, ein Einsinken der Klauen und Gelenke zwischen den Profilelemente verhindert. Die Klauen und Gelenke der Kuh kommen also nicht mit dem Boden des Viehstalls in Berührung, sondern liegen vielmehr auf den abgerundeten Oberflächen der Profilelemente auf. So werden, wie oben beschrieben, Verletzungen an den Klauen und Gelenken der Kuh vermieden, und die Klauen und Gelenke kommen nicht mit Flüssigkeit, die sich zwischen den Profilelementen gesammelt hat, in Berührung.

Daneben stellen die oben angegebenen Abstände der Profilelemente sicher, dass Flüssigkeit, die sich auf dem Boden des Viehstalls gesammelt hat, in kurzer Zeit verdunsten kann. Die hierfür unter anderem maßgebende Größe der Oberfläche des Bereichs, in dem Flüssigkeit aufgenommen werden kann, ist erfindungsgemäß durch die oben angegebenen Abstände der Profilelemente so gewählt, das einerseits gute Verdunstungseigenschaften erzielt werden können, andererseits aber ein Einsinken der Klauen und Gelenke der Kühe zwischen den Profilelementen verhindert wird. Das Volumen des sich zwischen den Profilelementen erstreckenden Bereichs, das zur Aufnahme von Flüssigkeit zur Verfügung steht und das von der Beabstandung der Profilelemente und der Höhe der Profilelemente abhängt, ist dabei erfindungsgemäß an die typische Rate anfallender Flüssigkeit und die Verdunstungsrate angepasst. So kann verhindert werden, dass der Pegel der Flüssigkeit über ein vorgegebenes Maß ansteigt.

Vorzugsweise beträgt der Abstand zwischen den ihrer Lage nach entsprechenden Punkte auf den benachbarten Profilelementen 6cm bis 11cm.

Gemäß einer vorteilhaften Weiterbildung der Erfindung weisen die Holmprofile in einer Ebene senkrecht zur Längsrichtung der Profilelemente einen Querschnitt auf, dessen größte Breite größer ist als dessen größte Höhe. Vorzugsweise entspricht die größte Breite des Querschnitts mindestens dem Doppelten der größten Höhe des Querschnitts. Vorzugsweise beträgt die größte Breite der Holmprofile 3cm bis 7cm.

Von besonderem Vorteil ist es, wenn die Profilelemente so dimensioniert und voneinander beabstandet sind, dass eine auf das Bodenelement aufgesetzte Klaue einer ausgewachsenen Kuh unabhängig von ihrer Orientierung Kontakt mit zumindest zwei der Profilelemente hat.

Durch eine solche Ausgestaltung des Bodenelements kann eine gleichmäßige Verteilung des Gewichts der Kuh auf eine hinreichend große Anzahl von Profilelementen sichergestellt werden. Punktuelle Belastungen der Klauen oder Gelenke der Kuh werden hierdurch ebenso vermieden wie eine zu starke Belastung eines einzelnen Profilelements des Bodenelements. Daneben hat diese Ausgestaltung des Bodenelements den oben erwähnten Vorteil, dass ein Einsinken der Klauen der Kuh, aber aufgrund ähnlicher Größenverhältnisse auch deren Gelenke, zwischen den Profilelementen verhindert wird. Die Klauen und Gelenke der Kuh kommen also nicht mit dem Boden des Viehstalls in Berührung, sondern liegen vielmehr auf den abgerundeten Oberflächen der Profilelemente auf.

### Kurze Beschreibung der Zeichnung

Weitere vorteilhafte Ausgestaltungen, auf die jedoch die Erfindung in ihrem Umfang nicht beschränkt ist, ergeben sich aus der folgenden Beschreibung anhand der Zeichnung. Es zeigen im Einzelnen:
- Fig. 1: einen Schnitt durch eine Ausführungsform des erfindungsgemäßen Bodenelements,
- Fig. 2: eine Draufsicht auf eine besondere Ausgestaltung des erfindungsgemäßen Bodenelements,
- Fig. 3: eine Draufsicht auf eine weitere besondere Ausgestaltung des erfindungsgemäßen Bodenelements,
- Fig. 4: eine Tiefbox, auf deren Boden ein erfindungsgemäße Bodenelement ausgelegt ist,
- Fig. 5: eine erste Detailansicht der Tiefbox mit erfindungsgemäßem Bodenelement aus Fig. 4,
- Fig. 6: eine zweite Detailansicht der Tiefbox mit erfindungsgemäßem Bodenelement aus Fig. 4,
- Fig. 7: eine Draufsicht auf eine weitere Ausführungsform des erfindungsgemäßen Bodenelements,
- Fig. 8: einen Schnitt durch die Ausführungsform des erfindungsgemäßen Bodenelements aus Fig. 7.

### Ausführliche Beschreibung der Erfindung

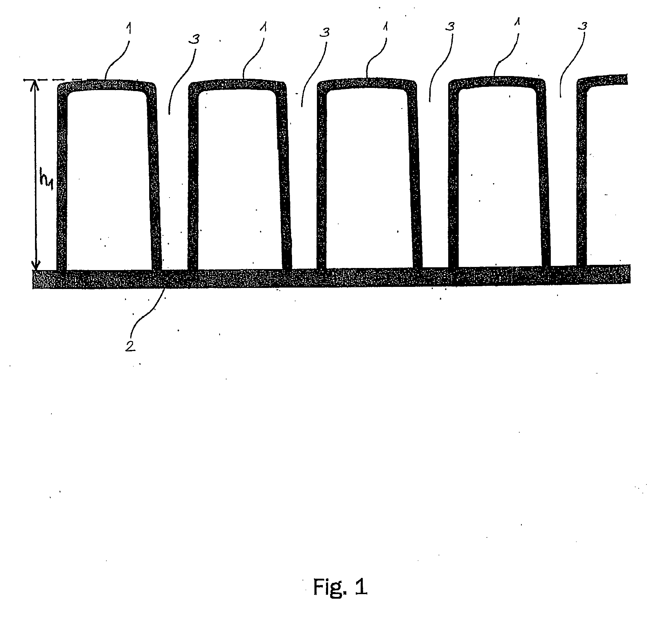

Figur 1 zeigt einen Schnitt durch ein erfindungsgemäßes Bodenelement. Auf einem Basiselement 2 sind eine Vielzahl von einzelnen, voneinander beabstandeten Erhebungen 1 ausgebildet. Die Erhebungen 1, die noppenartig ausgebildet sind, weisen an ihrer Oberseite eine abgerundete Oberfläche auf, die eine Auflagefläche bildet. Weiterhin sind die Erhebungen 1 so ausgestaltet, dass ihre Seitenflächen keinerlei scharfe Ecken oder Kanten besitzen. Aufgrund der Tatsache, dass die Erhebungen 1 keinerlei Ecken und Kanten aufweisen, besteht bei Verwendung des erfindungsgemäßen Bodenelements nicht die Gefahr von Verletzungen an den Gliedmaßen von sich auf das Bodenelement abliegenden, oder darauf ruhenden Kühen, selbst wenn oberhalb der Erhebungen 1 eine Einstreuschicht von nur geringer Dicke vorhanden ist. Die Formgebung der Erhebungen trägt somit unmittelbar dazu bei, den Liegekomfort der Kühe zu verbessern.

Gemäß einer Ausführungsform bestehen die Erhebungen 1, sowie das Basiselement 2 aus einem Kunststoff. Gemäß einer anderen Ausführungsform können die Erhebungen 1, sowie das Basiselement 2 aus einem gummielastischen Material, insbesondere Gummi oder Hartgummi, bestehen. Darüber hinaus kann das erfindungsgemäße Bodenelement aus weiteren Materialien gefertigt werden.

Zwischen den Erhebungen 1 ist ein nach oben hin offener Bereich 3 zur Aufnahme von Einstreu und Flüssigkeit gebildet. In diesen Bereich 3 eingebrachte Einstreu, beispielsweise Stroh, kann sich zwischen den Erhebungen 1 verhaken, so dass eine stabile Einstreumatratze gebildet wird. In diese Einstreumatratze eingebrachte Flüssigkeit kann sich auf dem Boden des Bereichs 3, das heißt auf der Oberfläche des Basiselements 2, sammeln. Wie unten ausgeführt werden wird, sind die Erhebungen 1 so beabstandet, dass die Klauen und Gelenke einer auf dem Bodenelement stehenden oder ruhenden Kuh nicht zwischen den Erhebungen 1 einsinken. Die Klauen und Gelenke der Kuh kommen folglich nicht mit der Oberfläche des Basiselements 2 in Berührung, sondern liegen vielmehr auf den abgerundeten Oberflächen der Erhebungen 1 auf.

Die Erhebungen 1 besitzen eine Höhe h₁, gemessen von ihrem höchsten Punkt über dem Basiselement 2 bis zu ihrem Fuß auf der Oberseite des Basiselements 2, von mindestens 2,5cm. Vorzugsweise beträgt die Höhe der Erhebungen mindestens 4 cm. Versuche haben gezeigt, dass im Rahmen der Erfindung eine Höhe der Erhebungen von mindestens 8cm, bevorzugt 8cm bis 12cm besonders vorteilhaft ist. In einer weiteren Ausführungsform beträgt die Höhe zumindest 10cm. Allerdings können die erfindungsgemäßen Vorteile des Bodenelements auch bei einer Höhe von mehr als 12cm und bis zu 15cm noch erzielt werden, wobei noch größere Höhen der Erhebungen zwar grundsätzlich möglich, im Hinblick auf höhere Materialkosten aber zu vermeiden sind. Durch eine derartig gewählte Höhe der Erhebungen 1 ist der Bereich 3 zur Aufnahme von Einstreu und Flüssigkeit ausreichend dimensioniert, um in die Einstreuauflage eingebrachte Flüssigkeit aufzunehmen, so dass höhere Schichten der Einstreuauflage, die mit der in der Tiefbox stehenden oder ruhenden Kuh in Kontakt kommen, trocken bleiben. Wie oben geschildert liegen die Klauen und Gelenke der Kuh gegebenenfalls auf den abgerundeten Oberflächen der Erhebungen 1 auf, versinken aber nicht zwischen den Erhebungen 1.

In den Bereich 3 eingebrachte Flüssigkeit kann aufgrund der Körperwärme der in der Tiefbox ruhenden Kuh und/oder durch im Stall bestehende Luftzirkulation in relativ rascher Zeit abtrocken. Hierzu trägt auch die spezielle Formgebung des nach oben hin offenen Bereichs 3 bei, insbesondere sein ausreichend dimensioniertes Volumen und seine große Oberfläche. Da in den Bereich 3 eingebrachte Flüssigkeit in relativ kurzer Zeit abtrocket, besteht nicht die Gefahr, dass sich Flüssigkeit in dem Bereich 3 ansammelt und letztendlich auch höhere Schichten der Einstreuauflage durchsetzt. Mit anderen Worten wird durch das Bereitstellen des Bereichs 3 sichergestellt, dass die oberste Schicht der Einstreuauflage, auf der die Kuh steht oder ruht, trocken gehalten wird, wodurch der Liegekomfort der Kuh maßgeblich verbessert wird.

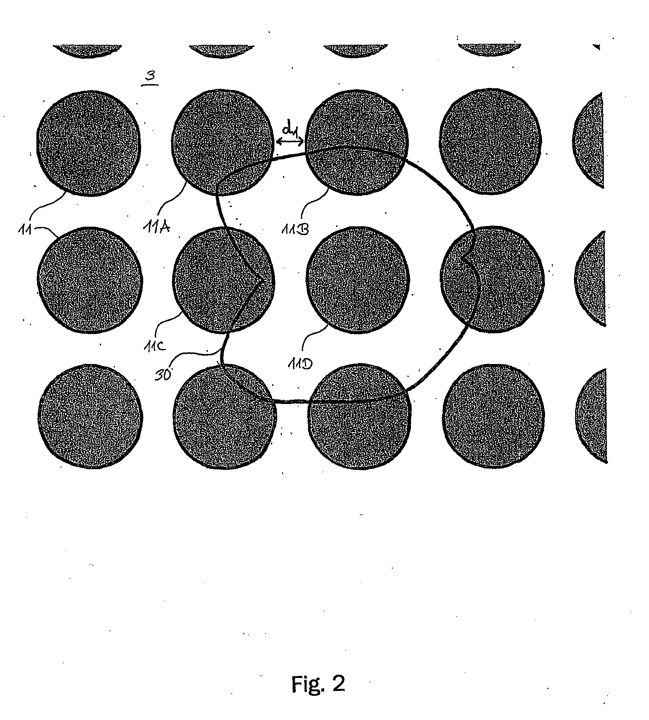

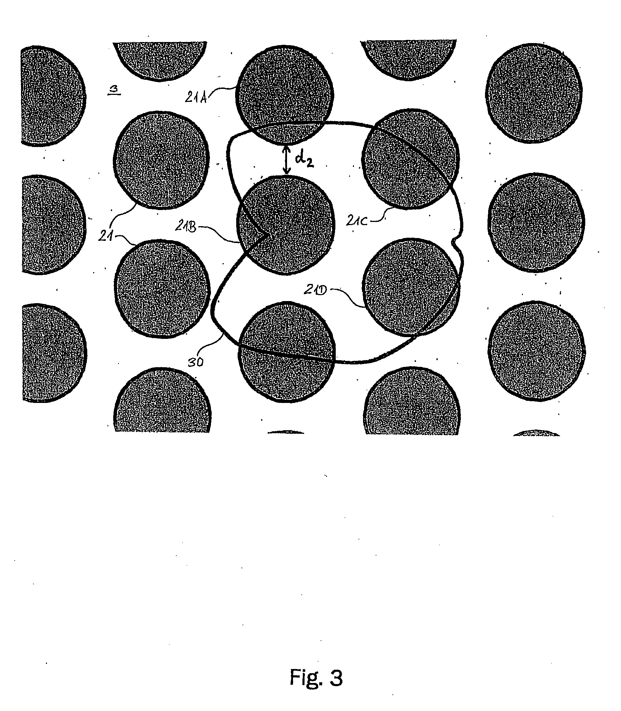

Die Erhebungen 1 können in ihrem Inneren einen Hohlraum aufweisen. Vorzugsweise ist dieser im Wesentlichen zylinderförmig oder von im Wesentlichen konischer Form. Hierdurch können bei der Herstellung des erfindungsgemäßen Bodenelementes Material eingespart und Kosten reduziert werden. Form und Größe der Hohlräume werden dabei entsprechend dem verwendeten Material an die Stabilitätserfordernisse des Bodenelements angepasst. Zentrales Kriterium ist hierbei die Gewichtsbelastung der Erhebungen durch eine in der Tiefbox stehende oder ruhende Kuh. Hierbei wird davon ausgegangen, dass die größte Gewichtsbelastung dann auftritt, wenn die Kuh in der Tiefbox steht. Die Gewichtsbelastung pro Erhebung ergibt sich dann aus dem Gewicht einer ausgewachsenen Kuh dividiert durch die Mindestanzahl an Erhebungen, die Kontakt mit den Klauen der stehenden Kuh haben. Wie unten mit Bezug auf Fig. 2 und 3 ausgeführt werden wird, kann für das erfindungsgemäße Bodenelement davon ausgegangen werden, dass jede Klaue einer in der Tiefbox stehenden Kuh, unabhängig von ihrer Orientierung, Kontakt mit zumindest vier der Erhebungen 1 hat. Entsprechend sind die Erhebungen 1 so ausgestaltet, dass sie jeweils einer Druckbelastung von zumindest 50kg standhalten. Gemäß einer besonders vorteilhaften Ausgestaltung der Erfindung sind die Erhebungen 1 so ausgestaltet, dass sie jeweils einer Druckbelastung von zumindest 80kg standhalten, um sicherzustellen, dass die Erhebungen 1 auch der Belastung einer auf das Bodenelement aufspringenden Kuh standhalten können.

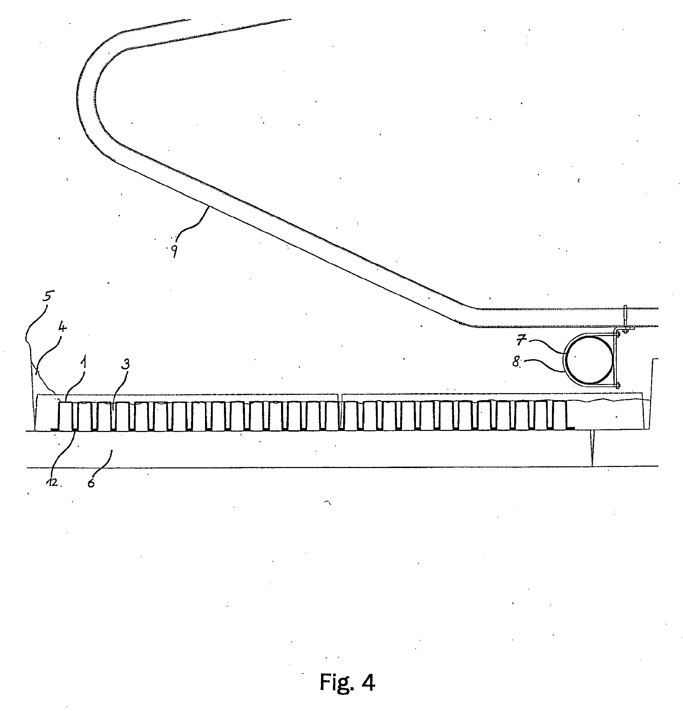

Wie in Fig. 1 gezeigt, sind die Erhebungen 1 auf das Basiselement 2 aufgesetzt. Alternativ können die Erhebungen 1 auch als halboffene, zur Unterseite des Basiselements 2 hin geöffnete Ausstülpungen des Basiselements 2 ausgebildet sein, wie dies in den unten beschriebenen Figuren 4 bis 6 dargestellt ist. Dabei entspricht das in Fig. 4 bis 6 gezeigte Basiselement 12 dem in der Fig. 1 gezeigten Basiselement 2, mit der Ausnahme, dass im Falle des Basiselements 12 ein im Inneren der Erhebungen 1 befindlicher Hohlraum mit der Unterseite des Basiselements 12 in Verbindung steht. Zwischen den Außenseiten der Erhebungen 1 und der Oberseite des Basiselements 2 wird dabei ein nahezu rechter Winkel eingeschlossen, beispielsweise ein Winkel zwischen 85° und 90°.

Wie oben ausgeführt, kann aufgrund des Volumens und der Formgebung des Bereichs 3 zur Aufnahme von Einstreu und Flüssigkeit, der zwischen den Erhebungen 1 gebildet wird, Flüssigkeit, die in die Einstreuauflage eingebracht wird, abtrocknen, ohne dass höhere Schichten der Einstreuauflage feucht werden, wodurch der Liegekomfort der Kühe verbessert wird. Es ist daher bei dem erfindungsgemäßen Bodenelement nicht erforderlich, der Drainage dienende rinnenartige Strukturen oder Bohrungen vorzusehen. Gleichermaßen weist das erfindungsgemäße Bodenelement als solches kein Gefälle auf, das heißt das Basiselement 2 weist über seine gesamte Fläche eine konstante Dicke auf. Auch auf dem Boden der Tiefbox bzw. des Viehstalls müssen aufgrund der Verdunstung der Flüssigkeit keine der Drainage dienenden Strukturen vorgesehen werden.

Bestimmungsgemäß wird auf das Bodenelement zumindest so viel Einstreu aufgebracht, dass die Einstreuauflage mit den Oberseiten der Erhebungen 1 bündig ist. Vorzugsweise wird so viel Einstreu aufgebracht, dass oberhalb der Oberseiten der Erhebungen 1 eine Einstreuschicht vorhanden ist. Bevorzugt beträgt die Dicke der Einstreuschicht oberhalb der Oberseiten der Erhebungen 1 etwa 3cm bis 10cm. Beträgt beispielsweise die Höhe der Erhebungen 5cm, wird bevorzugt eine Einstreuauflage mit einer Gesamtdicke von etwa 8cm bis 15cm bereitgestellt. Als unterste Schicht der Einstreuauflage kann auf die Oberseite des Basiselements 2 eine Schicht aus Sand aufgebracht sein.

Figuren 2 und 3 zeigen jeweils Draufsichten unterschiedlicher Ausgestaltungen des erfindungsgemäßen Bodenelements. Der Übersichtlichkeit halber sind nicht alle in Fig. 2 und 3 gezeigten Erhebungen 11, 21, die im Übrigen in ihrer Ausgestaltung den in Fig. 1 gezeigten Erhebungen 1 entsprechen, ausdrücklich mit einem Bezugszeichen versehen.

Die Erhebungen 11, 21 haben einen in einer Ebene parallel zur Oberseite des Basiselements 2 im Wesentlichen ring- oder kreisförmigen Querschnitt. Wie sich in Versuchen gezeigt hat, kann die erfindungsgemäße Wirkung des Bodenelements auch dann erzielt werden, wenn die Erhebungen 11, 21 alternativ einen im Wesentlichen ovalen Querschnitt aufweisen. Weiterhin ist auch ein im Wesentlichen quadrat- oder rechteckförmiger Querschnitt denkbar, wobei in diesem Fall die Ecken des quadrat- oder rechteckförmigen Querschnitts abgerundet sind, um eine abgerundete Oberfläche der Erhebungen 11, 21 sowohl an deren Oberseite als auch an deren Seitenflächen zu erhalten.

Vorzugsweise beträgt der Durchmesser des Querschnitts der Erhebungen 5cm bis 6cm. Die erfindungsgemäße Wirkung des Bodenelements wird jedoch auch dann noch erzielt, wenn der Durchmesser des Querschnitts der Erhebungen 11, 21 im Bereich zwischen 3cm und 7cm liegt. Im Falle eines im Wesentlichen ovalen Querschnitts sind obige Angaben auf den größten Durchmesser des im Wesentlichen ovalen Querschnitts zu beziehen, im Falle eines quadrat- oder rechteckförmigen Querschnitts auf die Flächendiagonale des quadrat- oder rechteckförmigen Querschnitts.

Die Erhebungen 11, 21 sind entlang sich kreuzender Reihen von Erhebungen angeordnet. Innerhalb solcher Reihen sind die Abstände zwischen benachbarten Erhebungen jeweils gleich. Allerdings sind auch solche Ausgestaltungen des erfindungsgemäßen Bodenelements vorstellbar, in denen innerhalb einer Reihe die Abstände zwischen jeweils benachbarten Erhebungen unterschiedlich sind. Bei Versuchen hat sich herausgestellt, dass die erfindungsgemäßen Vorteile insbesondere dann erzielt werden, wenn der kleinste Abstand zwischen einander zugewandten Seitenflächen unmittelbar benachbarter Erhebungen 2cm bis 3,5cm beträgt.

Figur 2 zeigt einen Fall, in dem sich die kreuzenden Reihen, entlang derer die Erhebungen 11 angeordnet sind, senkrecht aufeinander stehen. Beispielhaft werden im Folgenden die Erhebungen 11A, 11B, 11C, 11D zur Erläuterung der Anordnung der Erhebungen 11 auf dem Basiselement 2 herausgegriffen. Eine erste Reihe enthält beispielsweise die Erhebungen 11A und 11B, und eine die erste Reihe senkrecht kreuzende zweite Reihe enthält beispielsweise die Erhebungen 11A und 11C. Mit anderen Worten sind die Erhebungen 11 an den Gitterpunkten eines ebenen, periodischen Rechteckgitters angeordnet. Bevorzugt sind die Erhebungen 11 an den Gitterpunkten eines ebenen periodischen Quadratgitters angeordnet. Das heißt, der Abstand vom Mittelpunkt der Erhebung 11A zum Mittelpunt der Erhebung 11B ist gleich dem Abstand vom Mittelpunkt der Erhebung 11A zum Mittelpunkt der Erhebung 11C. Der Abstand der Erhebungen 11A und 11D voneinander ist entsprechend um einen Faktor √2 (Wurzel aus 2) größer. Entsprechendes gilt für die Abstandsverhältnisse der restlichen, in Fig. 2 nicht ausdrücklich bezeichneten Erhebungen 11.

In einer bevorzugten Ausführungsform des erfindungsgemäßen Bodenelements beträgt der kleinste Abstand zwischen einander zugewandten Seitenflächen unmittelbar benachbarter, einander nächstliegender Erhebungen (beispielsweise der Abstand d₁ zwischen den Erhebungen 11A und 11B oder der entsprechende Abstand zwischen den Erhebungen 11A und 11C) 2cm. Bei Versuchen hat sich herausgestellt, dass die erfindungsgemäßen Vorteile insbesondere dann erzielt werden, wenn der kleinste Abstand zwischen einander zugewandten Seitenflächen unmittelbar benachbarter Erhebungen 2cm bis 3,5cm beträgt.

Figur 3 zeigt eine alternative Ausgestaltung des erfindungsgemäßen Bodenelements. Hier sind die Erhebungen 21 entlang sich unter einem spitzen Winkel kreuzenden Reihen angeordnet. Beispielhaft werden im Folgenden die Erhebungen 21A, 21B, 21C, 21D zur Erläuterung der Anordnung der Erhebungen 21 auf dem Basiselement 2 herausgegriffen. Eine erste Reihe enthält beispielsweise die Erhebungen 21A und 21B, und eine die erste Reihe unter einem spitzen Winkel kreuzende zweite Reihe enthält beispielsweise die Erhebungen 21A und 21C. Mit anderen Worten sind die Erhebungen 21 an den Gitterpunkten eines ebenen, periodischen Dreieckgitters angeordnet, beziehungsweise entlang parallel zueinander verlaufender, gegeneinander versetzter Reihen von Erhebungen 21. Hierbei sind die Abstände, jeweils zwischen den entsprechenden Mittelpunkten der Erhebungen 21A und 21B einerseits und 21C und 21D andererseits identisch. Der Abstand zwischen den Erhebungen 21A und 21C kann gegebenenfalls größer oder kleiner sein. Besonders vorteilhaft ist eine Ausgestaltung, in der der Abstand zwischen den Erhebungen 21A und 21C gleich dem Abstand zwischen den Erhebungen 21B und 21C ist. In diesem Fall ist die Grundform des ebenen periodischen Gitters ein gleichschenkliges Dreieck. Insbesondere können die Abstände zwischen den Erhebungen so gewählt sein, dass zugleich der Abstand zwischen den Erhebungen 21A und 21B gleich dem Abstand zwischen den Erhebungen 21A und 21C ist, die Grundform des ebenen periodischen Gitters also ein gleichseitiges Dreieck ist. Entsprechendes gilt jeweils für die Abstandsverhältnisse der restlichen, in Fig. 3 nicht ausdrücklich bezeichneten Erhebungen 21.

In einer bevorzugten Ausführungsform des erfindungsgemäßen Bodenelements beträgt der kleinste Abstand zwischen einander zugewandten Seitenflächen unmittelbar benachbarter, einander nächstliegender Erhebungen (beispielsweise der Abstand d₂ zwischen den Erhebungen 21A und 21B oder der entsprechende Abstand zwischen den Erhebungen 21C und 21D) 2cm. Bei Versuchen hat sich herausgestellt, dass die erfindungsgemäßen Vorteile insbesondere dann erzielt werden, wenn der kleinste Abstand zwischen einander zugewandten Seitenflächen unmittelbar benachbarter Erhebungen 2cm bis 3,5cm beträgt.

In Figuren 2 und 3 ist jeweils die Silhouette der Klaue 30 einer Kuh angedeutet. Wie aus diesen Figuren zu erkennen ist, sind die Erhebungen 11, 21 in ihrer Abmessung und ihrer Beabstandung an die Größe der Klaue 30 einer ausgewachsenen Kuh angepasst. Die Klaue 30 der Kuh hat, unabhängig von ihrer Orientierung, Kontakt mit zumindest vier der Erhebungen 11, 21. So kann gewährleistet werden, dass das Gewicht einer ausgewachsenen Kuh von etwa 800kg gleichmäßig auf eine hinreichend große Zahl von Erhebungen 11, 21 verteilt wird. So werden eine punktuelle Belastung der Klaue der Kuh, welche zu Klauenschäden führen kann, wie auch eine Überbelastung einzelner Erhebungen vermieden.

Gleichermaßen ist zu beachten, dass durch die mit Bezug auf Fig. 2 und 3 beschriebenen Abmessungen und die Beabstandung der Erhebungen 11, 21 sichergestellt wird, dass die Gelenke einer auf dem erfindungsgemäßen Bodenelement ruhenden Kuh nicht zwischen benachbarte Erhebungen 11, 21 einsinken kann. Dies würde einerseits zu Scheuerstellen an dem betreffenden Gelenk führen, und andererseits unter Umständen dazu, dass das betreffende Gelenk mit Flüssigkeit, die sich auf dem Boden des Basiselements 2 zwischen den Erhebungen 11, 21 gesammelt hat, in Kontakt kommt. Die angegebenen Abstände und Abmessungen der Erhebungen 11, 21 machen es also unmöglich, dass die Gelenke oder Klauen der Kuh mit der Oberfläche des Basiselements 2 in Berührung kommen. Vielmehr liegen die Gelenke und Klauen auf den abgerundeten Oberflächen der Erhebungen 11, 21 auf.

Weiterhin verhindern wie oben gewählte Abstände und Abmessungen der Erhebungen 11, 21 ein Verscharren der Einstreu durch die Kühe, da sich insbesondere Stroh als Einstreu aufgrund der die Abstände überschreitenden Länge der Strohhalme besonders gut zwischen den Erhebungen 11, 21 verhaken kann und die Kühe mit ihren Klauen kaum in den zwischen den Erhebungen 11, 21 gebildeten Bereich 3 eindringen können.

Zuletzt stellen die oben angegebenen Abstände der Erhebungen 11, 21 sicher, dass Flüssigkeit, die sich auf der Oberfläche des Basiselements 2 gesammelt hat, in kurzer Zeit verdunsten kann. Die hierfür unter anderem maßgebende Größe der Oberfläche des Bereichs 3, in dem Flüssigkeit aufgenommen werden kann, ist durch die oben angegebenen Abstände so gewählt, das einerseits gute Verdunstungseigenschaften erzielt werden können, andererseits aber wie oben geschildert ein Einsinken der Klauen und Gelenke der Kühe zwischen den Erhebungen 11, 21 verhindert wird.

Figur 4 zeigt eine Tiefbox, auf deren Boden das erfindungsgemäße Bodenelement ausgelegt ist. Die Länge dieser Tiefbox ist durch eine in der Figur links gezeigte Kotschwelle 5 und ein in der Figur rechts gezeigtes Bugrohr 7, welches durch einen Bügel 8 gehalten wird, und durch ein nicht in der Figur gezeigtes Nackenrohr begrenzt. Vorzugsweise beträgt die Länge der Tiefbox etwa 1,75m bis 1,80m, wobei der für die Kuh verfügbare Raum durch ein Verschieben des das Bugrohr 7 haltenden Bügels 8 entlang eines Trennbügels 9, und durch ein Verschieben des Nackenrohres verändert werden kann. Hierdurch kann die Länge der Tiefbox an die Räumigkeit der Kühe angepasst werden, so dass Ausscheidungen einer in der Tiefbox stehenden oder ruhenden Kuh in den hinter der Kotschwelle 5 liegenden, in der Figur nicht gezeigten Laufgang fallen kann, und eine Durchsetzung der Einstreuauflage 4 in der Tiefbox mit Fäkalien weitestgehend vermieden wird. Eine Schwemmentmistung der Tiefbox ist aus diesem Grund weder vorgesehen, noch erforderlich. Der Trennbügel 9 trennt seitlich benachbarte Tiefboxen voneinander ab. In der Figur nicht gezeigt sind senkrecht zur Kotschwelle verlaufende seitliche Schwellen der Tiefbox, die unterhalb der jeweiligen Trennbügel 9 verlaufen und deren Höhe niedriger sein kann als die der Kotschwelle 5. Die durch den Abstand der seitlichen Schwellen bestimmte Breite der Tiefbox beträgt vorzugsweise etwa 1,20m bis 1,25m.

Auf dem Boden der in Fig. 4 gezeigten Tiefbox ist ein erfindungsgemäßes Bodenelement bestehend aus einem Basiselement 12 und einer Vielzahl von darauf ausgebildeten Erhebungen 1 ausgelegt. Der Übersichtlichkeit halber ist nur die in der Figur am linken Rand befindliche Erhebung 1 ausdrücklich mit einem Bezugszeichen gekennzeichnet. Das Bodenelement ist auf den Boden 6 der Tiefbox aufgelegt. Vorzugsweise sind die Abmessungen des Bodenelements an die der Tiefbox angepasst, so dass das Bodenelement die Bodenfläche der Tiefbox vollständig bedeckt. Zumindest betragen die Abmessungen des Bodenelements jedoch etwa 1,50m in seiner Längsrichtung und etwa 1,10m in seiner Querrichtung.

Das Bodenelement kann dabei aus mehreren Teilelementen zusammengesetzt sein, beispielsweise kann das Bodenelement aus vier im Wesentlichen rechteckförmigen Teilelementen zusammengesetzt sein, die miteinander verzapft sind. Abweichend von diesem Beispiel sind weitere Formen der Teilelemente, eine andere Anzahl, sowie ein alternative Verbindungsmethoden denkbar. Durch ein solches Zusammensetzen des Bodenelements aus kleineren Teilelementen kann eine vereinfachte Herstellung des Bodenelements erzielt werden.

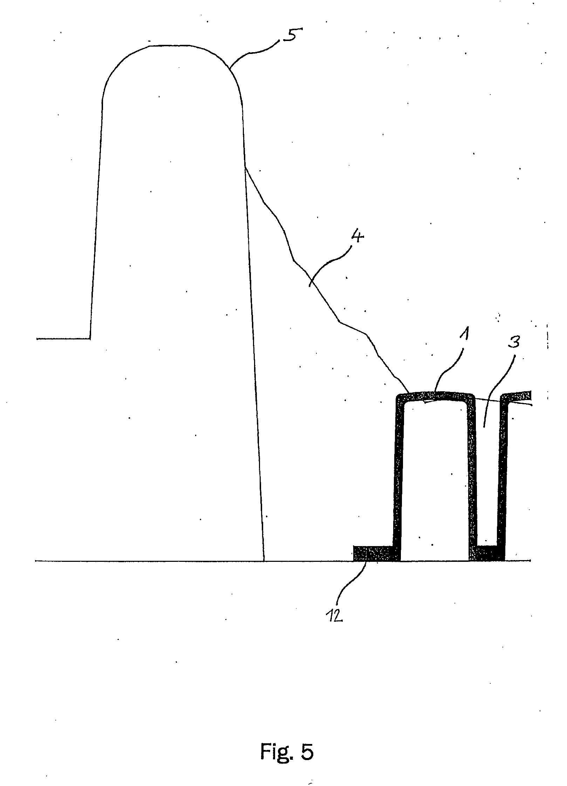

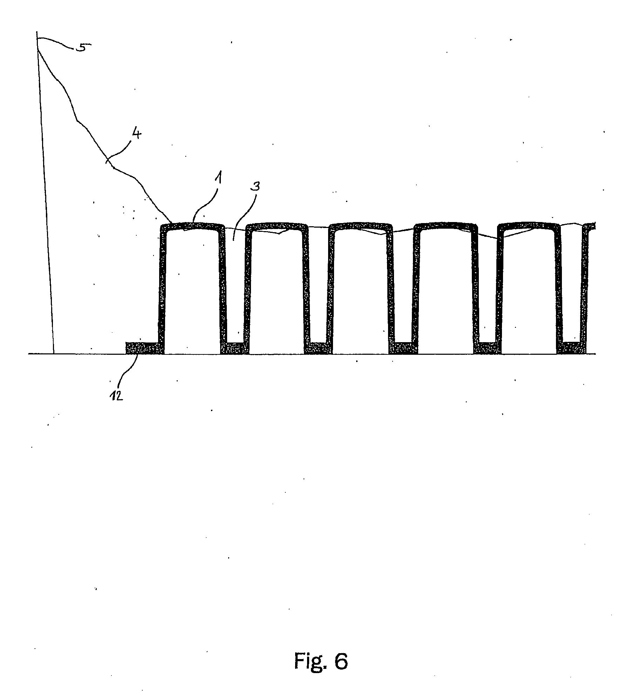

Figuren 5 und 6 zeigen jeweils eine Detailansicht der Fig. 4. Wie auch in Fig. 4, ist in diesen Figuren ein Beispiel für eine mögliche Befüllung der Tiefbox mit Einstreu 4 gezeigt. Das in den Figuren gezeigte Beispiel bezieht sich auf eine vorzugsweise nicht zu unterschreitende Dicke der in der Tiefbox vorhandenen Einstreuauflage. Wie in den Figuren deutlich zu sehen ist, besteht allerdings auch in einem solchen Fall nicht die Gefahr der oben angesprochenen Verletzungen an Knochenvorsprüngen, insbesondere an Gelenken der Kühe, da die abgerundeten Oberflächen der Erhebungen 1 der Kuh eine komfortable Auflagefläche bieten, und weiterhin die gewählte Beabstandung der Erhebungen 1 ein Versinken der Gelenke der Kuh in den zwischen den Erhebungen 1 gebildeten Zwischenraum 3 verhindern, so dass die Klauen und Gelenke stets auf den abgerundeten Oberflächen der Erhebungen 1 aufliegen und nicht mit der Oberfläche des Basiselements 12 in Berührung kommen. Daher kann bei Auslage eines erfindungsgemäßen Bodenelements auf dem Boden 6 der Tiefbox selbst bei sehr geringer Dicke der Einstreuauflage den Anforderungen der Kühe an den Liegekomfort der Tiefbox, insbesondere an die Elastizität und Trockenheit der Einstreuauflage, Rechnung getragen werden.

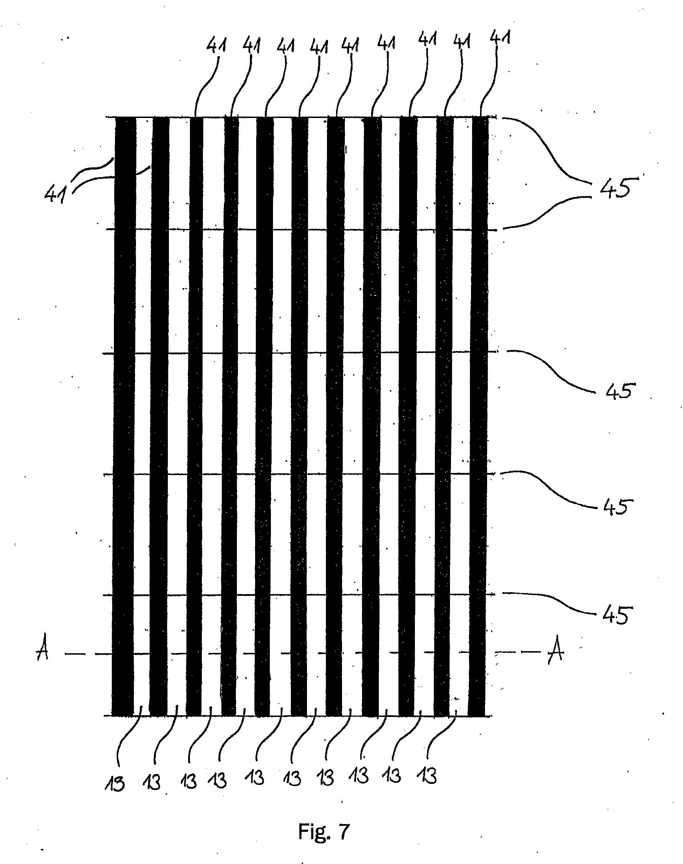

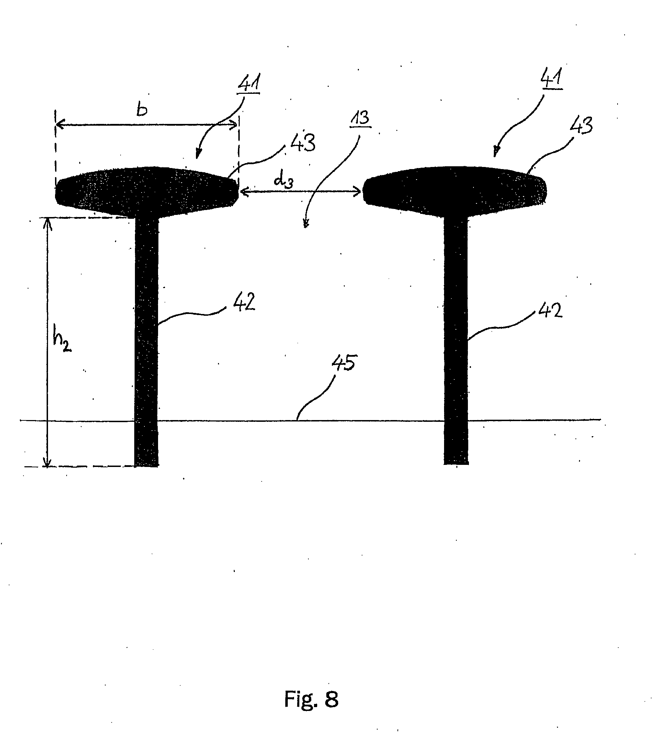

Figuren 7 und 8 zeigen eine weitere Ausführungsform eines erfindungsgemäßen Bodenelements. Konkret zeigt Fig. 7 eine Draufsicht auf das Bodenelement, und Fig. 8 einen Schnitt durch das Bodenelement entlang der in Fig. 7 gezeigten Linie A-A. Das Bodenelement dieser Ausführungsform besteht aus einer Vielzahl von parallel zueinander angeordneten Profilelementen 41. Die Abstände zwischen benachbarten Profilelementen 41 sind dabei jeweils im Wesentlichen gleich. Als besonders vorteilhaft hat sich ein Abstand (Querversatz) zwischen benachbarten Profilelementen 41 von 6cm bis 11cm herausgestellt, wobei dieser Abstand als der Abstand zwischen einander ihrer Lage auf benachbarten Profilelementen 41 nach entsprechenden Punkten zu verstehen ist, das heißt beispielweise der Abstand von der Mittellinie des einen Profilelements 41 zur Mittellinie des anderen Profilelements 41.

Die Profilelemente 41 weisen ein Stegprofil 42 auf, welches ein Holmprofil 43 trägt. Zwischen benachbarten Profilelementen 41, das heißt insbesondere zwischen deren Stegprofilen 42, ist jeweils ein sich entlang der Längsrichtung der Profilelemente 41 erstreckender, nach oben hin offener Bereich 13 zur Aufnahme von Einstreu und Flüssigkeit gebildet. Dieser Bereich entspricht in seiner Funktion dem in Fig. 1 bis 6 dargestellten Bereich 3.

Die Profilstege 42 weisen, gemessen vom Boden des Stalls, auf dem das Bodenelement aufgelegt ist, bis zur Unterseite des jeweiligen Holmprofils 43, eine Höhe h₂ von zumindest 4cm auf. Bei Versuchen hat sich herausgestellt, dass eine besonders vorteilhafte Höhe der Stegprofile 42 mindestens 8cm beträgt und insbesondere zwischen 8cm und 12cm liegt. In einer weiteren Ausführungsform beträgt die Höhe zumindest 10cm. Wie sich weiterhin gezeigt hat, können die Vorteile des erfindungsgemäßen Bodenelements bis zu einer Höhe der Stegprofile 42 von mehr als 12cm und bis zu 15cm erzielt werden, wobei noch größere Höhen der Erhebungen zwar grundsätzlich möglich, im Hinblick auf höhere Materialkosten aber zu vermeiden sind.

Die Holmprofile 43 der Profilelemente 41 sind so beschaffen, dass sie an ihrer Oberseite eine abgerundete Auflagefläche aufweisen. Dabei können die Holmprofile 43 durch ein entlang der Längsrichtung der Profilelemente 41 verlaufendes Rohr oder einen Stab gebildet sein, welches oder welcher vorzugsweise einen ovalen Querschnitt mit größerer Breite b als Höhe aufweist. Als besonders vorteilhaft hat sich ein Holmprofil herausgestellt, dessen Querschnitt eine größte Breite besitzt, die zumindest dem Doppelten der größten Höhe des Holmprofils entspricht. Auf diese Weise wird an der Oberseite des Holmprofils eine abgerundete Oberfläche (Trittfläche) bereitgestellt, die zudem hinreichend flach ist, so dass ein Abrutschen der Kuh mit ihren Klauen bzw. Gelenken verhindert wird. Vorzugsweise beträgt die größte Breite b der Holmprofile 3cm bis 7cm.

Gemäß einer Ausführungsform ist der Abstand (Querversatz) zwischen benachbarten Profilelementen 41 so gewählt, dass er mindestens dem Eineinhalbfachen der größten Breite b der Holmprofile 43 entspricht. Das bedeutet, dass der lichte Abstand d₃ (d.h. der Spalt) zwischen einander zugewandten Seitenflächen benachbarter Holmprofile 43 mindestens halb so groß ist, wie die größte Breite b der Holmprofile 43. In einer besonders vorteilhaften Ausführungsform der Erfindung beträgt der lichte Abstand d₃ (d.h. der Spalt) zwischen benachbarten Profilelementen 3cm bis 4cm.

Entsprechend dem Fall der Ausgestaltungen der Figuren 2 und 3 sind die Profilelemente 41 in ihrer Abmessung und ihrer Beabstandung an die Größe der Klaue und der Gelenke einer ausgewachsenen Kuh angepasst. Die Klaue der Kuh hat, unabhängig von ihrer Orientierung, Kontakt mit zumindest zwei der Profilelemente 41. Allerdings ist es je nach Wahl der größten Breite b der Holmprofile 43 und des lichten Abstands d₃ auch möglich, dass die Klaue der Kuh unabhängig von ihrer Orientierung Kontakt mit zumindest drei der Profilelemente 41 hat. So kann gewährleistet werden, dass das Gewicht einer ausgewachsenen Kuh gleichmäßig verteilt wird, und die Gelenke einer auf dem Bodenelement ruhenden Kuh nicht zwischen benachbarte Profilelemente 41 einsinken können. Dies würde einerseits zu Scheuerstellen an dem betreffenden Gelenk führen, und andererseits unter Umständen dazu, dass das betreffende Gelenk mit Flüssigkeit, die sich im Bereich 13 gesammelt hat, in Kontakt kommt. Die angegebenen Abstände und Abmessungen der Profilelemente 41 machen es also unmöglich, dass die Gelenke oder Klauen der Kuh mit der Oberfläche des Bodens des Viehstalls in Berührung kommen. Vielmehr liegen die Gelenke und Klauen auf den abgerundeten Oberflächen der Profilelemente 41 auf.

Weiterhin verhindern wie oben gewählte Abstände und Abmessungen der Profilelemente 41 ein Verscharren der Einstreu durch die Kühe, da es den Kühen unmöglich ist, in den zwischen den Profilelementen 41 gebildeten Bereich mit ihren Klauen einzudringen.

Zuletzt stellen die oben angegebenen Abstände der Profilelemente 41 sicher, dass Flüssigkeit, die sich auf der Oberfläche des Bodens des Viehstalls bzw. zwischen den Profilelementen 41 gesammelt hat, in kurzer Zeit verdunsten kann. Die hierfür unter anderem maßgebende Größe der Oberfläche des Bereichs 13, in dem Flüssigkeit aufgenommen werden kann, ist durch die oben angegebenen Abstände der Profilelemente 41 so gewählt, das einerseits gute Verdunstungseigenschaften erzielt werden können, andererseits aber wie oben geschildert ein Einsinken der Klauen und Gelenke der Kühe zwischen den Profilelementen 41 verhindert wird.

Die Profilelemente 41 sind mit sie kreuzenden Streben 45 verbunden, wodurch die Profilelemente 41 in ihrer Lage relativ zueinander fixiert werden. Beispielsweise können die Profilstege 42 mit den Streben 45 verbunden sein. Durch die Profilelemente 41 und die sie kreuzenden Streben 45 wird so ein Rost gebildet, der auf den Boden einer Tiefbox aufgelegt werden kann. Dabei sind die Streben 45 so ausgebildet und mit den Profilelementen 41 verbunden, dass bei Bedarf sich in den Bereichen 13 befindliches Material durch eine Räumbewegung entlang der Längsrichtung der Profilelemente 41 ohne Behinderung durch die Streben 45 ausgeräumt werden kann.

Wie auch über die in den Fig. 1 bis 6 dargestellte Ausführungsform des Bodenelements, ist hier vorgesehen, dass Einstreu zumindest bis zum höchsten Punkt der Holmprofile 43 eingefüllt wird. Idealerweise wird jedoch auch oberhalb der Oberseite der Holmprofile eine Einstreuschicht einer gewissen Dicke, beispielsweise 3cm bis 10cm, bereitgestellt. Als unterste Schicht der Einstreuauflage kann auf den Boden der Tiefbox eine Schicht aus Sand aufgebracht sein. Auch bei Verwendung dieser Ausführungsform ist eine Schwemmentmistung weder vorgesehen, noch erforderlich.

Gemäß einer Ausführungsform bestehen die Profilelemente 41, sowie die Streben 45 aus einem Kunststoff. Gemäß einer anderen Ausführungsform können die Profilelemente 41, sowie die Streben 45 aus einem gummielastischen Material, insbesondere Gummi oder Hartgummi, bestehen. Darüber hinaus kann das erfindungsgemäße Bodenelement aus weiteren Materialien gefertigt werden. Wie auch schon im Zusammenhang mit der ersten Ausführungsform beschrieben sind die Profilelemente 41 so ausgebildet, dass sie den Belastungen durch eine auf das Bodenelement aufspringende, ausgewachsene Kuh standhalten können.

Die Erfindung wurde anhand konkreter Ausgestaltungen näher erläutert, ohne auf die konkreten Ausführungsformen begrenzt zu sein. Insbesondere ist es möglich, Merkmale der unterschiedlichen Ausführungsformen zu kombinieren und auch in den anderen Ausführungsformen einzusetzen.

## Patentansprüche

1. Bodenelement zum Auslegen auf dem Boden eines Viehstalls, mit einem Basiselement (2; 12), auf dessen Oberseite eine Vielzahl von einzelnen, voneinander beabstandeten Erhebungen (1; 11; 21) angeordnet sind, und einem nach oben hin offenen, sich zwischen den Erhebungen erstreckenden Bereich (3) zur Aufnahme von Einstreu (4) und Flüssigkeit,
wobei die Erhebungen (1; 11; 21) an ihrer Oberseite eine abgerundete Oberfläche aufweisen, und
die Verteilung der Erhebungen (1; 11; 21) auf dem Basiselement (2;12) so bemessen ist, dass bei einer Höhe der Erhebungen (1; 11; 21) von mindestens 8cm, gemessen von ihrem Fuß auf der Oberseite des Basiselements (2; 12) bis zu ihrem höchsten Punkt über dem Basiselement (2; 12) ein direkter Kontakt von in dem Viehstall gehaltenen Vieh mit der in dem sich zwischen den Erhebungen erstreckenden Bereich (3) aufgenommenen Flüssigkeit verhindert wird.

2. Bodenelement nach Anspruch 1, wobei die Erhebungen (1; 11; 21) in einer Ebene parallel zur Oberfläche des Basiselements (2; 12) einen im Wesentlichen kreis- oder ringförmigen Querschnitt aufweisen.

3. Bodenelement nach Anspruch 2, wobei der im Wesentlichen kreis- oder ringförmige Querschnitt einen Durchmesser von 3cm bis 7cm aufweist.

4. Bodenelement nach Anspruch 1, wobei die Erhebungen (1; 11; 21) in einer Ebene parallel zur Oberfläche des Basiselements (2; 12) einen im Wesentlichen ovalen Querschnitt aufweisen.

5. Bodenelement nach Anspruch 4, wobei der im Wesentlichen ovale Querschnitt einen größten Durchmesser von 3cm bis 7cm aufweist.

6. Bodenelement nach mindestens einem der vorhergehenden Ansprüche, wobei das Basiselement (2; 12) über seine Fläche eine konstante Dicke aufweist.

7. Bodenelement nach mindestens einem der vorhergehenden Ansprüche, wobei die Erhebungen (1; 11; 21) in ihrem Inneren einen Hohlraum aufweisen.

8. Bodenelement nach mindestens einem der vorhergehenden Ansprüche, wobei die Erhebungen (1; 11; 21) entlang sich kreuzender Reihen von Erhebungen (1; 11; 21) angeordnet sind.

9. Bodenelement nach mindestens einem der vorhergehenden Ansprüche, wobei unmittelbar benachbarte Erhebungen (1; 11; 21) so voneinander beabstandet sind, dass der kleinste Abstand zwischen einander zugewandten Seitenflächen der unmittelbar benachbarten Erhebungen (1; 11; 21) 2cm bis 3,5cm beträgt.

10. Bodenelement nach mindestens einem der vorhergehenden Ansprüche, wobei die Erhebungen (1; 11; 21) so dimensioniert und voneinander beabstandet sind, dass eine auf das Bodenelement aufgesetzte Klaue (30) einer ausgewachsenen Kuh unabhängig von ihrer Orientierung Kontakt mit zumindest vier der Erhebungen (1; 11; 21) hat.

11. Bodenelement nach mindestens einem der vorhergehenden Ansprüche, wobei das Basiselement (2; 12) eine Breite von zumindest 110cm und eine Länge von zumindest 150cm aufweist.

12. Bodenelement zum Auslegen auf dem Boden eines Viehstalls, mit einer Vielzahl von parallel zueinander angeordneten Profilelementen (41), die ein in ihrer Längsrichtung verlaufendes Holmprofil (43) und ein in ihrer Längsrichtung verlaufendes, das Holmprofil tragende Stegprofil (42) aufweisen,
wobei zwischen jeweils benachbarten Profilelementen (41) ein nach oben hin geöffneter Bereich (13) zur Aufnahme von Einstreu und Flüssigkeit gebildet wird,
die Holmprofile (43) an ihrer Oberseite eine abgerundete Oberfläche aufweisen, und
die Profilelemente (41) so voneinander beabstandet sind, dass bei einer Höhe der Stegprofile (42) von mindestens 8 cm, gemessen von dem Boden des Viehstalls bis zur Unterseite des jeweiligen Holmprofils (43) ein direkter Kontakt von in dem Viehstall gehaltenem Vieh mit der in dem nach oben hin geöffneten Bereich (13) aufgenommenen Flüssigkeit verhindert wird.

13. Bodenelement nach Anspruch 12, wobei unmittelbar benachbarte Profilelemente (41) so voneinander beabstandet sind, dass der kleinste Abstand einander zugewander Seitenflächen der benachbarten Profilelemente (41) 3cm bis 4cm beträgt.

14. Bodenelement nach Anspruch 12 oder 13, wobei die Holmprofile (43) in einer Ebene senkrecht zur Längsrichtung der Profilelemente (41) einen Querschnitt aufweisen, dessen größte Breite größer ist als dessen größte Höhe.

15. Bodenelement nach Anspruch 14, wobei die größte Breite des Querschnitts 3cm bis 7cm beträgt.
